# DEMANDE DE BREVET EUROPEEN

(11) **EP 1 955 893 A2**
(43) Date de publication de la demande: **13.08.2008**
(21) Numéro de dépôt: 08290110.9
(22) Date de dépôt: 06.02.2008
(51) Int. Cl.: B60N 2/48

(54) **Dispositif de blocage d'une tige crantée d'appui-tête comprenant des butées de sécurité**

(30) Priorité: 09.02.2007 FR 0700946
(71) Demandeur: Centre d'etude et de recherche pour l'automobile (CERA), 51100 Reims (FR)
(72) Inventeur: DeHondt, Thierry, 51430 Tinqueux (FR); Dauchez, Fernand, 2400 Bezu Saint Germain (FR)
(74) Mandataire: Sayettat, Julien Christian

(57) **Abrégé**

L'invention concerne un dispositif (1) de blocage en coulissement axial d'une tige (2) crantée de montage d'appui-tête de siège de véhicule automobile, ledit dispositif comprenant ladite tige pourvue d'au moins un cran (3), une gaine (4), destinée à recevoir ladite tige en coulissement, ladite gaine comprenant un logement (5), un tiroir (6) monté en coulissement radial dans ledit logement, ledit tiroir comprenant une saillie (7) agencée pour pouvoir s'engager dans ledit cran de sorte à bloquer ladite tige réversiblement en coulissement, un moyen de contrainte élastique (8) monté entre ledit logement et ledit tiroir de sorte à pouvoir disposer ladite saillie en appui contre ladite tige, ledit tiroir comprenant une première surface de butée (9) et ledit dispositif comprenant une première surface de butée réciproque (10), périphérique audit tiroir, lesdites surfaces de butée respectives étant agencées pour, lorsque ladite saillie est engagée dans ledit cran, coopérer entre elles de sorte à transformer un effort axial sur la tige, selon un premier sens prédéterminé (11), en un effort radial d'engagement de ladite saillie dans ledit cran.

## Description

L'invention concerne un dispositif de blocage en coulissement axial d'une tige crantée d'appui-tête de siège de véhicule automobile, un composant de siège comprenant une tige d'un tel dispositif et une gaine d'un tel dispositif.

Il est connu de réaliser un dispositif de blocage en coulissement axial d'une tige crantée de montage d'appui-tête de siège de véhicule automobile, ledit dispositif comprenant :
- ladite tige pourvue d'au moins un cran,
- une gaine, destinée à recevoir ladite tige en coulissement, ladite gaine comprenant un logement,
- un tiroir monté en coulissement radial dans ledit logement, ledit tiroir comprenant une saillie agencée pour pouvoir s'engager dans ledit cran de sorte à bloquer réversiblement ladite tige en coulissement,
- un moyen de contrainte élastique monté entre ledit logement et ledit tiroir de sorte à pouvoir disposer ladite saillie en appui contre ladite tige.

Le moyen de contrainte permet, lorsque la saillie se trouve en regard du cran, d'engager ladite saillie dans ledit cran de sorte à effectuer le blocage de la position de l'appui-tête en hauteur.

Pour effectuer le désengagement de la saillie du cran, l'utilisateur doit effectuer une manoeuvre manuelle à l'encontre du moyen de contrainte.

En cas d'accident, le choc de la tête du passager sur l'appui-tête exerce un appui vers le bas sur l'appui-tête, ce qui crée un risque de désengagement de la saillie du cran, et place l'utilisateur en configuration dangereuse.

De même, sous l'effet du poids de l'appui tête et de son inertie, il peut se produire en cas de décélération brutale une force vers le haut qui peut produire un désengagement de la saillie du cran et un risque de projection de l'appui-tête, ce qui crée un danger pour les passagers.

L'invention a pour but de pallier ces inconvénients

A cet effet, et selon un premier aspect, l'invention propose un dispositif de blocage en coulissement axial d'une tige crantée de montage d'appui-tête de siège de véhicule automobile, ledit dispositif comprenant :
- ladite tige pourvue d'au moins un cran,
- une gaine, destinée à recevoir ladite tige en coulissement, ladite gaine comprenant un logement,
- un tiroir monté en coulissement radial dans ledit logement, ledit tiroir comprenant une saillie agencée pour pouvoir s'engager dans ledit cran de sorte à bloquer ladite tige réversiblement en coulissement,
- un moyen de contrainte élastique monté entre ledit logement et ledit tiroir de sorte à pouvoir disposer ladite saillie en appui contre ladite tige,
ledit tiroir comprenant une première surface de butée et ledit dispositif comprenant une première surface de butée réciproque, périphérique audit tiroir, lesdites surfaces de butée respectives étant agencées pour, lorsque ladite saillie est engagée dans ledit cran, coopérer entre elles de sorte à transformer un effort axial sur la tige, selon un premier sens prédéterminé, en un effort radial d'engagement de ladite saillie dans ledit cran.

Dans cette description, les termes de positionnement dans l'espace (haut, bas, inférieur, vertical,...) sont pris en référence au dispositif disposé dans le véhicule.

Un tel agencement permet, lors d'une collision, que la saillie ne puisse se désengager du cran et que l'appui-tête reste en configuration de sécurité.

Selon un deuxième aspect, l'invention propose un composant de siège de véhicule automobile, formé d'un appui-tête ou d'un dossier, comprenant une tige d'un tel dispositif.

Selon un troisième aspect, l'invention propose une gaine d'un tel dispositif.

D'autres particularités et avantages de l'invention apparaîtront dans la description qui suit, faite en référence aux figures jointes dans lesquelles :
- la figure 1 est une représentation schématique partielle en coupe verticale d'un dispositif selon un premier mode de réalisation, la saillie étant engagée dans le cran,
- la figure 2 est une représentation schématique partielle en coupe verticale d'un dispositif selon un deuxième mode de réalisation, la saillie étant engagée dans le cran, en configuration de coopération des surfaces de butée, lors d'un coulissement de la tige selon un premier sens prédéterminé (a) et selon un deuxième sens prédéterminé (b).

En référence aux figures, on décrit un dispositif 1 de blocage en coulissement axial d'une tige 2 crantée de montage d'appui-tête de siège de véhicule automobile, ledit dispositif comprenant :
- ladite tige pourvue d'au moins un cran 3,
- une gaine 4, destinée à recevoir ladite tige en coulissement, ladite gaine comprenant un logement 5,
- un tiroir 6 monté en coulissement radial dans ledit logement, ledit tiroir comprenant une saillie 7 agencée pour pouvoir s'engager dans ledit cran de sorte à bloquer ladite tige réversiblement en coulissement,
- un moyen de contrainte élastique 8 monté entre ledit logement et ledit tiroir de sorte à pouvoir disposer ladite saillie en appui contre ladite tige,
ledit tiroir comprenant une première surface de butée 9 et ledit dispositif comprenant une première surface de butée réciproque 10, périphérique audit tiroir, lesdites surfaces de butée respectives étant agencées pour, lorsque ladite saillie est engagée dans ledit cran, coopérer entre elles de sorte à transformer un effort axial sur la tige, selon un premier sens prédéterminé 11, en un effort radial d'engagement de ladite saillie dans ledit cran.

Lors d'un effort axial exercé sur la tige 2 selon le premier sens prédéterminé 11, les surfaces 9,10 coopèrent par effet de coulisseau pour pousser la saillie 7 dans le cran 3, et empêcher ainsi son désengagement.

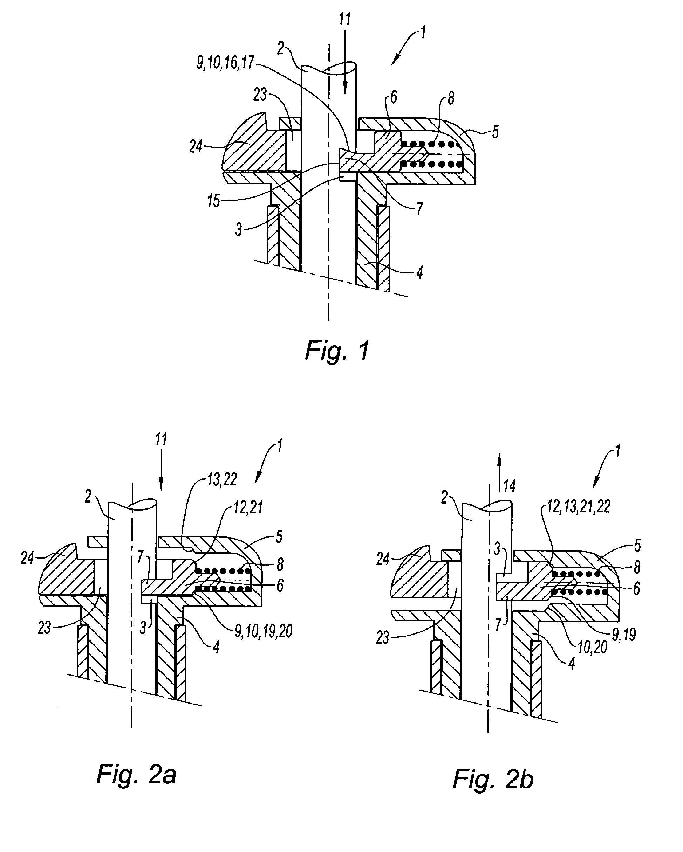

Selon la réalisation de la figure 2, le tiroir comprend en outre une deuxième surface de butée 12 et une deuxième surface de butée réciproque 13 périphérique audit tiroir étant prévue, lesdites surfaces de butée respectives étant agencées pour, lorsque ladite saillie est engagée dans ledit cran, coopérer entre elles de sorte à transformer un effort axial sur la tige, selon un deuxième sens prédéterminé 14, en un effort radial d'engagement de ladite saillie dans ledit cran.

Selon la réalisation de la figure 1, le cran 3 comprend une première paroi 16, formant première surface de butée réciproque 10, et la saillie 7 étant pourvue d'une première face 17, formant première surface de butée 9, ladite première paroi étant inclinée par rapport à une direction radiale, ladite première face étant sous forme d'épaulement de géométrie complémentaire.

De façon non représentée, le cran 3 pourrait comprendre en outre une deuxième paroi, formant deuxième surface de butée réciproque 10, et la saillie 7 être pourvue d'une deuxième face, formant deuxième surface de butée 9, ladite deuxième paroi étant inclinée par rapport à une direction radiale, ladite deuxième face étant sous forme d'épaulement de géométrie complémentaire.

Selon la réalisation de la figure 2, le tiroir 6 est en outre monté en coulissement axial dans le logement 5, ledit tiroir comprenant une première rampe 19 inclinée, située à distance de la saillie 7, formant première surface de butée 9, une première rampe complémentaire 20, formant première surface de butée réciproque 10, étant prévue dans ledit logement, un déplacement axial dudit tiroir, induit par un actionnement de la tige 2 en coulissement dans le premier sens prédéterminé 11, entraînant une coopération entre ladite première rampe et ladite première rampe complémentaire.

Le tiroir 6 comprend en outre une deuxième rampe inclinée 21, située à distance de la saillie 7, formant deuxième surface de butée 12, une deuxième rampe complémentaire 22, formant deuxième surface de butée réciproque 13, étant prévue dans le logement 5, un déplacement axial dudit tiroir, induit par un actionnement de la tige 2 en coulissement dans le deuxième sens prédéterminé 14, entraînant une coopération entre ladite deuxième rampe et ladite deuxième rampe complémentaire.

Dans un composant de siège de véhicule automobile, formé d'un appui-tête ou d'un dossier, pourvu d'au moins une tige 2 d'un dispositif selon la réalisation de la figure 1, ladite tige comprend au moins un cran 3, ledit cran comprenant une paroi 16, ladite paroi étant inclinée par rapport à une direction radiale.

Dans une gaine 4 d'un dispositif selon la réalisation de la figure 1, destinée à être associée à un appui-tête ou un dossier, ladite gaine comprend un logement 5 dans lequel est monté un tiroir 6 en coulissement radial, ledit tiroir comprenant une saillie 7 pourvue d'une première face 17 sous forme d'épaulement.

Dans une gaine 4 d'un dispositif selon la réalisation de la figure 2, destinée à être associée à un appui-tête ou un dossier, ladite gaine comprend un logement 5 dans lequel est monté un tiroir 6 en coulissement radial et axial, ledit tiroir étant pourvu d'une saillie 7, ledit tiroir comprenant au moins une rampe 19,21 inclinée, située à distance de ladite saillie, formant surface de butée 9,12, au moins une rampe complémentaire 20,22 correspondante, formant surface de butée réciproque 10,13, étant prévue dans ledit logement, un déplacement axial dudit tiroir, dans un sens prédéterminé 11,14, entraînant une coopération entre ladite rampe et ladite rampe complémentaire correspondante.

Sur les réalisations représentées, la tige 2 est solidaire de l'appui-tête, la gaine 4 étant associée au dossier de siège.

Afin de permettre un positionnement du tiroir 6 en position axiale médiane, entre les deux positions de coopération des surfaces de butée 9,10,12,13, il est prévu, sur la réalisation de la figure 2, des pattes 30 élastiques issues de matière dudit tiroir, lesdites pattes étant agencées pour pouvoir fléchir et permettre un déplacement axial dudit tiroir dans l'un ou l'autre des sens prédéterminés 11,14.

Selon les réalisations représentées, le tiroir 6 est sous forme d'une plaque pourvue d'un orifice 23 de réception de la tige 2, la saillie 7 étant formée par une portion du bord dudit orifice.

De façon non représentée, la saillie 7 peut être pourvue d'un renfort métallique.

Selon les réalisations représentées, une partie du tiroir 6 forme bouton 24 de désengagement manuel de la saillie 7 du cran 3.

## Revendications

1. Dispositif (1) de blocage en coulissement axial d'une tige (2) crantée de montage d'appui-tête de siège de véhicule automobile, ledit dispositif comprenant :
• ladite tige pourvue d'au moins un cran (3),
• une gaine (4), destinée à recevoir ladite tige en coulissement, ladite gaine comprenant un logement (5),
• un tiroir (6) monté en coulissement radial dans ledit logement, ledit tiroir comprenant une saillie (7) agencée pour pouvoir s'engager dans ledit cran de sorte à bloquer ladite tige réversiblement en coulissement,
• un moyen de contrainte élastique (8) monté entre ledit logement et ledit tiroir de sorte à pouvoir disposer ladite saillie en appui contre ladite tige,
ledit dispositif étant **caractérisé en ce que** ledit tiroir comprend une première surface de butée (9) et **en ce qu'**il comprend une première surface de butée réciproque (10), périphérique audit tiroir, lesdites surfaces de butée respectives étant agencées pour, lorsque ladite saillie est engagée dans ledit cran, coopérer entre elles de sorte à transformer un effort axial sur la tige, selon un premier sens prédéterminé (11), en un effort radial d'engagement de ladite saillie dans ledit cran.

2. Dispositif selon la revendication 1, le tiroir comprenant en outre une deuxième surface de butée (12) et une deuxième surface de butée réciproque (13) périphérique audit tiroir étant prévue, lesdites surfaces de butée respectives étant agencées pour, lorsque ladite saillie est engagée dans ledit cran, coopérer entre elles de sorte à transformer un effort axial sur la tige, selon un deuxième sens prédéterminé (14), en un effort radial d'engagement de ladite saillie dans ledit cran.

3. Dispositif selon la revendication 1 ou 2, le cran (3) comprenant une première paroi (16), formant première surface de butée réciproque (10), et la saillie (7) étant pourvue d'une première face (17), formant première surface de butée (9), ladite première paroi étant inclinée par rapport à une direction radiale, ladite première face étant sous forme d'épaulement de géométrie complémentaire.

4. Dispositif selon la revendication 3, le cran (3) comprenant en outre une deuxième paroi, formant deuxième surface de butée réciproque (10), et la saillie (7) étant pourvue d'une deuxième face, formant deuxième surface de butée (9), ladite deuxième paroi étant inclinée par rapport à une direction radiale, ladite deuxième face étant sous forme d'épaulement de géométrie complémentaire.

5. Dispositif selon la revendication 1 ou 2, le tiroir (6) étant en outre monté en coulissement axial dans le logement (5), ledit tiroir comprenant une première rampe (19) inclinée, située à distance de la saillie (7), formant première surface de butée (9), une première rampe complémentaire (20), formant première surface de butée réciproque (10), étant prévue dans ledit logement, un déplacement axial dudit tiroir, induit par un actionnement de la tige (2) en coulissement dans le premier sens prédéterminé (11), entraînant une coopération entre ladite première rampe et ladite première rampe complémentaire.

6. Dispositif selon la revendication 5, le tiroir (6) comprenant en outre une deuxième rampe inclinée (21), située à distance de la saillie (7), formant deuxième surface de butée (12), une deuxième rampe complémentaire (22), formant deuxième surface de butée réciproque (13), étant prévue dans le logement (5), un déplacement axial dudit tiroir, induit par un actionnement de la tige (2) en coulissement dans le deuxième sens prédéterminé (14), entraînant une coopération entre ladite deuxième rampe et ladite deuxième rampe complémentaire.

7. Composant de siège de véhicule automobile, formé d'un appui-tête ou d'un dossier, pourvu d'au moins une tige (2) d'un dispositif selon l'une quelconque des revendications 3 ou 4, ladite tige comprenant au moins un cran (3), ledit cran comprenant une paroi (16), ladite paroi étant inclinée par rapport à une direction radiale.

8. Gaine (4) d'un dispositif selon l'une quelconque des revendications 5 ou 6, ladite gaine comprenant un logement (5) dans lequel est monté un tiroir (6) en coulissement radial et axial, ledit tiroir étant pourvu d'une saillie (7), ledit tiroir comprenant au moins une rampe (19,21) inclinée, située à distance de ladite saillie, formant surface de butée (9,12), au moins une rampe complémentaire (20,22) correspondante, formant surface de butée réciproque (10,13), étant prévue dans ledit logement, un déplacement axial dudit tiroir, dans un sens prédéterminé (11,14), entraînant une coopération entre ladite rampe et ladite rampe complémentaire correspondante.
